# EUROPÄISCHE PATENTSCHRIFT

(11) **EP 3 205 213 B1**
(45) Veröffentlichungstag und Bekanntmachung des Hinweises auf die Patenterteilung: **03.04.2019**
(21) Anmeldenummer: 16155538.8
(22) Anmeldetag: 12.02.2016
(51) Int. Cl.: A22C 21/00

(54) **FLÜGELSCHNEIDVORRICHTUNG UND VERFAHREN ZUM ABTRENNEN VON FLÜGELN ODER FLÜGELTEILEN**
WING CUTTING DEVICE AND METHOD FOR SEPARATING WINGS OR WING PARTS
DISPOSITIF DE SÉPARATION D'AILE ET PROCÉDÉ DE SÉPARATION D'AILES OU DES PARTIES D'AILE

(43) Veröffentlichungstag der Anmeldung: 16.08.2017
(73) Patentinhaber: Linco Food Systems A/S, 8380 Trige (DK)
(72) Erfinder: VEEN, Tim Andries, 6515 BL Nijmegen (NL); GERRITSEN, Johannes Cornelis, 7006 KX Doetinchem (NL); POLMAN, Rudi Theodorus Maria, 6981 EG Doesburg (NL)
(74) Vertreter: Stork Bamberger Patentanwälte PartmbB

(56) Entgegenhaltungen:
- EP-A1- 0 312 881
- US-A- 4 669 148
- US-A- 4 715 092
- US-A1- 2003 045 223

## Beschreibung

Die vorliegende Erfindung betrifft eine Flügelschneidvorrichtung zur Verarbeitung von Geflügelschlachtkörpern, umfassend eine zum Fördern der Geflügelschlachtkörper entlang einer Förderstrecke in Transportrichtung eingerichtete Fördereinrichtung, eine erste Trenneinrichtung und eine zweite Trenneinrichtung, die zum paarigen Abtrennen von Flügeln oder Flügelteilen von jeweils einem der Geflügelschlachtkörper ausgebildet sind.

Des Weiteren betrifft die Erfindung ein Verfahren zum Abtrennen von Flügeln oder Flügelteilen von Geflügelschlachtkörpern, umfassend die Schritte Fördern der Geflügelschlachtkörper entlang einer Förderstrecke in Transportrichtung mittels einer Fördereinrichtung und paariges Abtrennen der Flügel oder der Flügelteile von jeweils einem der Geflügelschlachtkörper.

Eine solche Flügelschneidvorrichtung ist beispielsweise aus dem Dokument WO 92 / 07470 A1 bekannt. Die Flügel oder die Flügelteile werden mittels Flügelhaltern in eine Schneidposition verbracht und beidseitig zeitgleich mittels rotierender Messer abgetrennt.

Weitere Flügelschneidvorrichtungen sind aus den Dokumenten US 4,669,148 und US 4,715,092 bekannt.

Nachteil ist einerseits, dass der apparative Aufwand zum Halten und Positionieren der abzutrennenden Flügel oder Flügelteile hoch ist. Andererseits sind die Positionen von Messern und Flügelhaltern jeweils fix vorgegeben, so dass beim Abtrennen der Flügel oder der Flügelteile unterschiedlicher Geflügelkörperanatomien unberücksichtigt bleiben. Dies führt zu einer unpräzisen und nicht verlässlichen Schnittführung.

Es ist daher Aufgabe der vorliegenden Erfindung, eine Flügelschneidvorrichtung der eingangs genannten Art vorzuschlagen, die bei möglichst geringer baulicher Komplexität ein präzises Abtrennen der Flügel oder der Flügelteile erlaubt. Des Weiteren besteht die Aufgabe darin, ein entsprechendes Verfahren vorzuschlagen.

Die Aufgabe wird durch eine Anordnung gemäß Anspruch 1 gelöst.

Der Abstand zwischen der ersten und zweiten Trenneinrichtung ist vorzugsweise so gewählt, dass das Abtrennen eines der Flügel oder der Flügelteile mittels der ersten Trenneinrichtung bereits abgeschlossen ist, bevor die zweite Trenneinrichtung mit dem noch an dem jeweiligen Geflügelschlachtkörper verbleibenden der Flügel oder der Flügelteile zum Abtrennen desselben in Eingriff gelangt. Anders ausgedrückt ist die erfindungsgemäße Flügelschneidvorrichtung zum sequentiellen Abtrennen der Flügel- oder Flügelteilpaare ausgebildet und eingerichtet. Dies bietet den Vorteil, dass sich die Geflügelschlachtkörper jeweils während des Abtrennvorgangs nur einseitig mit einer der Trenneinrichtungen in Eingriff befinden. Der jeweilige Geflügelschlachtkörper ist folglich nicht beidseitig während des Abtrennens fixiert, sondern in einem gewissen Maß beweglich. So ist unabhängig von der Größe der Geflügelschlachtkörper eine präzise Schnittführung gewährleistet.

Die Erfindung ist dadurch gekennzeichnet, dass die Fördereinrichtung Trägerelemente zum Fördern und Halten der Geflügelschlachtkörper umfasst, wobei die Trägerelemente derart eingerichtet sind, dass die Geflügelschlachtkörper zumindest im Wesentlichen quer zu der Transportrichtung ausweichlich gelagert sind. Dies bietet den Vorteil, dass die Geflügelschlachtköper quer zu der Transportrichtung in einem gewissen Maß in Querrichtung - je nach Größe des Geflügelschlachtkörpers - ausweichen können. Dies stellt einen entscheidenden Vorteil gegenüber den aus dem Stand der Technik bekannten Flügelschneideinrichtungen dar, bei denen durch beidseitige zeitgleiche Fixierung der Flügel bzw. Flügelteile ein Ausweichen des Geflügelschlachtkörper quer zu der Transportrichtung ausgeschlossen ist. Das Ausweichen in der Querrichtung bewirkt, dass jeweils der abzutrennende der Flügel bzw. der abzutrennende Flügelteil in optimaler Weise in der ersten Trenneinrichtung bzw. der zweiten Trenneinrichtung abgetrennt wird, da die Flügel oder die Flügelteile aufgrund der in der Querrichtung zwangsführungsfreien Lagerung des Geflügelschlachtkörpers optimal für den Trennschnitt positioniert werden können.

Besonders bevorzugt sind die Trägerelemente derart eingerichtet, dass diese in den Trägerelementen in Transportrichtung gefördert werden, jedoch die Geflügelschlachtkörper zumindest in der Querrichtung quer zu der Transportrichtung beweglich gelagert sind. Weiter bevorzugt sind die Trägerelement selbst derart eingerichtet, dass diese quer zu der Transportrichtung verschieblich gelagert sind. Das Ausweichen der Geflügelkörper quer zu der Transportrichtung wird in diesem Fall durch eine Querverschiebung der Trägerelemente selbst erreicht.

Eine bevorzugte Weiterbildung der Erfindung zeichnet sich dadurch aus, dass die Fördereinrichtung als Hängeförderer ausgebildet ist, um die Geflügelschlachtkörper mittels der Trägerelemente an den Beinen hängend aufzunehmen. Dies bietet einerseits den Vorteil, dass die erfindungsgemäße Flügelschneidvorrichtung unmittelbar in eine ein Hängeförderersystem aufweisende Geflügelverarbeitungsanlage integrierbar eingerichtet ist. Zudem bietet die Hängeförderung den Vorteil, dass die Geflügelschlachtkörper aufgrund Ihrer Aufhängung an den Trägerelementen quer oder im Wesentlichen quer zu der Transportrichtung beweglich und wie zuvor beschrieben daher entsprechend ausweichlich gelagert sind.

Gemäß einer weiteren bevorzugten Ausbildung der Erfindung umfassen die erste Trenneinrichtung und die zweite Trenneinrichtung Führungseinrichtungen, wobei jede der Führungseinrichtungen jeweils einen sich parallel zu der Transportrichtung erstreckenden Führungsspalt aufweist, und eingerichtet sind, die Flügel oder die Flügelteile jeweils in einem der Führungsspalte zu halten und zumindest im Wesentlichen parallel zu der Transportrichtung zu führen. Die Führungseinrichtungen gewährleisten ein präzises Ausrichten und Positionieren der abzutrennenden Flügel oder der abzutrennenden Flügelteile. Auf diese Weise werden diese während des kontinuierlichen Transportierens der Geflügelschlachtkörper in eine optionale Position zum Abtrennen der Flügel oder Flügelteile geführt.

Eine weitere zweckmäßige Ausbildung der Erfindung ist dadurch gekennzeichnet, dass die Führungsspalte in der Transportrichtung sich verjüngend ausgebildet sind. Die sich verjüngend eingerichteten Führungsspalte bewirken, dass die Flügel oder die Flügelteile in dem jeweiligen der Führungsspalte so verschoben werden, dass der jeweilige Gelenkbereich zwischen den abzutrennenden der Flügelteile in dem jeweiligen Führungsspalt ausgerichtet wird. Mit anderen Worten sind die Führungseinrichtungen auf diese Weise so ausgebildet, dass diese selbsttätig die optimale Trennstelle für den abschließenden Trennschnitt "suchen" und so die abzutrennenden Flügel oder Flügelteile präzise ausrichten und positionieren.

Gemäß einer weiteren bevorzugten Ausführungsform ist den Führungseinrichtungen jeweils eine Einfädeleinrichtung, die zum Einfädeln des Flügels oder des Flügelteils in den Führungsspalt eingerichtet ist, vorgeordnet. Mittels der Einfädeleinrichtung werden die jeweils abzutrennenden Flügel bzw. Flügelteile den Führungseinrichtungen zugeführt.

Eine weitere zweckmäßige Ausgestaltung der Erfindung ist dadurch gekennzeichnet, dass den Führungseinrichtungen jeweils ein Schneidmittel nachgeordnet ist, wobei das Schneidmittel jeweils zum Abtrennen des Flügel oder des Flügelteils eingerichtet ist. Auf diese Weise wird die Ausführung der eingangs genannten Trennschnitte mittels hoher Präzision durchgeführt. Mittels der Führungseinrichtungen wird aufgrund der querausweichlichen Lagerung der Geflügelschlachtkörper der jeweils abzutrennende Flügel bzw. Flügelteil exakt positioniert und ausgerichtet, so dass der mittels der Schneidmittel nachfolgende Trennschnitt die gewünschte hohe Präzision aufweist. Anatomische Unterschiede der Geflügelschlachtkörper wirken sich so nicht auf die Präzision der Trennschnitte aus.

Gemäß einer weiteren bevorzugten Ausbildung der Erfindung sind die Schneidmittel stationär angeordnet. Dies gewährleistet den Einsatz konstruktiv möglichst einfacher Schneidmittel, die wenig wartungsanfällig sind, hygienische Anforderung aufgrund leichter Reinigung erfüllen und aufgrund ihrer konstruktiven Einfachheit kostengünstig sind.

Eine zweckmäßige Ausgestaltung der Erfindung ist dadurch gekennzeichnet, dass jedes der Schneidmittel zwei einen Schneidspalt bildende Schneidkanten umfasst, die eingerichtet sind, den Flügel oder den Flügelteil abzutrennen. Die Schneidmittel erfüllen auf diese Weise eine Doppelfunktion. Mittels der Schneidkanten werden die abzutrennenden Flügel oder die Flügelteile optimal positioniert und anschließend abgetrennt.

Eine bevorzugte Weiterbildung der Erfindung zeichnet sich dadurch aus, dass die Schneidmittel derart angeordnet sind, dass eine von den Schneidkanten sowie dem Schneidspalt gebildete Schneidebene gegenüber der Horizontalen geneigt angeordnet ist. Auf diese Weise sind die Schneidmittel optimal an die Position angepasst, die die Flügel oder die Flügelteile der Geflügelschlachtkörper während des Förderns annehmen. So werden einerseits unerwünschte Kollisionen von Teilen der Geflügelschlachtkörper oder der Flügel bzw. der Flügelteile mit der erfindungsgemäßen Flügelschneidvorrichtung vermieden. Zum anderen ist die erfindungsgemäße Flügelschneideinrichtung optimal auf die anatomischen Gegebenheit der zu verarbeitenden Geflügelschlachtkörper angepasst.

Gemäß einer weiteren bevorzugten Ausbildung der Erfindung umfasst diese eine Reihe von mitlaufenden Schiebeelementen, die jeweils in Zuordnung zu einem der Trägerelemente in Transportrichtung mitlaufen und eingerichtet sind, jeweils mit dem Flügel oder mit den Flügelteile in Eingriff zu gelangen. Die Schiebeelemente stützten die genannten Bereiche jeweils in Transportrichtung und tragen zu einer exakten Positionierung während des Abtrennvorgangs bei.

Eine weitere zweckmäßige Ausbildung der Erfindung ist dadurch gekennzeichnet, dass die Schiebeelemente ferner eingerichtet sind, in einem Schulterbereich mit dem jeweiligen Geflügelschlachtkörper in Eingriff zu gelangen. Durch die zusätzliche Stützung des Schulterbereichs wird die jeweilige Seite des Geflügelschlachtkörpers gestützt, an dem die Flügel oder die Flügelteile abgetrennt werden. Anders ausgedrückt wird die jeweilige Seite des Geflügelkörpers während des Förderns in Transportrichtung relativ zu dem Schiebeelement und dem Trägerelement zusätzlich fixiert.

Gemäß einer weiteren bevorzugten Ausführungsform sind die Schiebeelemente jeweils u-profilförmig ausgebildet und umfassen jeweils ein Schulterbereichsschiebeteil und ein Flügelbereichsschiebeteil mit einer dazwischen liegenden Schiebeteilausnehmung. Auf diese Weise sind die Schiebeelemente als besonders kompakte und einfache Baueinheit ausgebildet. Vorzugsweise sind die Schiebeelemente ferner jeweils einstückig ausgebildet.

Eine weitere zweckmäßige Ausgestaltung der Erfindung ist dadurch gekennzeichnet, dass die Schiebeelemente quer zur Transportrichtung derart angeordnet sind, dass zumindest eine der Führungseinrichtungen jeweils zumindest teilweise in der Schiebeteilausnehmung angeordnet ist. Auf diese Weise wird eine optimale Führung des abzutrennenden Flügels bzw. Flügelteile erreicht.

Gemäß einer weiteren bevorzugten Ausbildung der Erfindung sind die Schiebeelemente mittels mindestens einer Antriebseinheit zum Bewegen der Schiebeelemente in Transportrichtung angetrieben. Mittels der Antriebseinheit werden die Schiebeelemente aktiv in Transportrichtung bewegt, um die genannten Bereiche des Geflügelschlachtkörpers bzw. der Flügel oder der Flügelteile aktiv in Transportrichtung zu stützen.

Eine zweckmäßige Ausgestaltung der Erfindung ist dadurch gekennzeichnet, dass die Antriebsgeschwindigkeit der Antriebseinheit variabel derart einstellbar eingerichtet ist, dass jedes der Schiebeelemente gegenüber dem zugeordneten Trägerelement zumindest temporär vorlaufend oder nachlaufend eingerichtet ist. Dies bietet den Vorteil, dass die Stützkraft, mittels derer die Schiebeelemente die zuvor genannten Bereiche des Geflügelschlachtkörpers bzw. der Flügel oder der Flügelteile stützen, variabel einstellbar eingerichtet ist.

Die Aufgabe wird auch durch ein Verfahren gemäß Anspruch 16 gelöst. Das erfinderische Verfahren bietet den Vorteil, dass die Geflügelschlachtkörper während des Abtrennvorgangs jeweils nur einseitig, nämlich mit dem Flügel bzw. dem Flügelteil, mit einer der ersten Trenneinrichtung oder der zweiten Trenneinrichtung in Eingriff befindet, fixiert sind. Der Geflügelschlachtkörper ist folglich nicht beidseitig während des Abtrennens fixiert, sondern in einem gewissen Maß beweglich eingerichtet. So ist jederzeit eine präzise Schnittführung - unabhängig von der Größe der Geflügelschlachtkörper - gewährleistet.

Das erfinderische Verfahren zeichnet sich dadurch aus, dass die Geflügelschlachtkörper mittels Trägerelementen derart gehalten und gefördert werden, dass die Geflügelschlachtkörper jeweils zumindest quer zu der Transportrichtung ausweichlich gelagert sind. Dies bietet den Vorteil, dass die Geflügelschlachtköper quer zu der Transportrichtung nicht starr fixiert sind, sondern in einem gewissen Maß in Querrichtung - je nach Größe des Geflügelschlachtkörpers - ausweichen können. Dies stellt einen entscheidenden Vorteil gegenüber den aus dem Stand der Technik bekannten Flügelschneideinrichtungen dar, bei denen durch beidseitige Fixierung der Flügel bzw. Flügelteile ein Ausweichen des Geflügelschlachtkörper quer zu der Transportrichtung ausgeschlossen ist. Das Ausweichen in der Querrichtung bewirkt, dass jeweils der abzutrennende der Flügel oder der Flügelteile in optimaler Weise in der ersten Trenneinrichtung bzw. der zweiten Trenneinrichtung abgetrennt wird, da die Flügel oder die Flügelteile aufgrund der in der Querrichtung zwangsführungsfreien Lagerung des Geflügelschlachtkörpers in der Querrichtung für einen präzisen Trennschnitt optimal positioniert werden können.

Gemäß einer weiteren bevorzugten Ausbildung der Erfindung werden die Geflügelschlachtkörper mittels der Trägerelemente an den Beinen hängend gefördert. Das erfindungsgemäße Verfahren kann so auf einfache Weise in Geflügelverarbeitungssysteme mit Hängeförderung integriert werden. Zudem bietet die Hängeförderung den Vorteil, dass die Geflügelschlachtkörper aufgrund Ihrer Aufhängung an den Trägerelementen quer oder im Wesentlichen quer zu der Transportrichtung beweglich und wie zuvor beschrieben daher entsprechend ausweichlich gelagert sind.

Im Folgenden sind weitere vorteilhafte Ausgestaltungen des erfindungsgemäßen Verfahrens beschrieben. Die sich daraus ergebenden Vorteile sind bereits zuvor im Zusammenhang mit der erfindungsgemäßen Flügelschneidvorrichtung umfassend beschrieben. Zur Vermeidung von Wiederholungen wird daher auf die dort genannten Vorteile auch im Zusammenhang mit den im Folgenden beschriebenen vorteilhaften Ausgestaltungen explizit verwiesen.

Eine weitere zweckmäßige Ausbildung der Erfindung ist durch paralleles Führen der Flügel oder der Flügelteile mittels Führungseinrichtungen, die jeweils sich parallel zur Transportrichtung erstreckende Führungsspalte aufweisen, gekennzeichnet.

Gemäß einer weiteren bevorzugten Ausführungsform umfasst das erfindungsgemäße Verfahren das Einfädeln der Flügel oder der Flügelteile in den jeweiligen Führungsspalt mittels einer Einfädeleinrichtung.

Eine weitere zweckmäßige Ausgestaltung der Erfindung ist dadurch gekennzeichnet, dass die Flügel oder die Flügelteile mittels jeweils den Führungseinrichtungen nachgeordneten Schneidmitteln abgetrennt werden.

Gemäß einer weiteren bevorzugten Ausbildung der Erfindung wird das Abtrennen mittels stationär angeordneten Schneidmitteln ausgeführt.

Eine zweckmäßige Ausgestaltung der Erfindung ist dadurch gekennzeichnet, dass die Flügel oder die Flügelteilte in einen mittels zweier Schneidkanten gebildeten Schneidspalt zum Abtrennen derselben geführt werden.

Eine bevorzugte Weiterbildung der Erfindung zeichnet sich dadurch aus, dass das Abtrennen durch Schneiden in einer von den Schneidkanten sowie dem Schneidspalt gebildeten gegenüber der Horizontalen geneigten Schneidebene erfolgt.

Gemäß einer weiteren bevorzugten Ausbildung der Erfindung ist eine Reihe von mitlaufenden Schiebeelementen jeweils einem der Trägerelemente zugeordnet und laufen unter Eingriff mit einem der Flügel oder einem der Flügelteile in Transportrichtung mit.

Eine weitere zweckmäßige Ausbildung der Erfindung ist dadurch gekennzeichnet, dass die Trägerelemente jeweils mit einem Schulterbereich mit dem Geflügelschlachtkörper in Eingriff gelangen.

Gemäß einer weiteren bevorzugten Ausführungsform werden die Schiebeelemente zum Bewegen in Transportrichtung mittels einer Antriebseinheit angetrieben.

Eine weitere zweckmäßige Ausgestaltung der Erfindung ist gekennzeichnet durch zumindest temporäres Variieren der Antriebsgeschwindigkeit der Antriebseinheit, so dass jedes der Schiebeelemente gegenüber dem zugeordneten Trägerelement zumindest temporär vorläuft oder nachläuft.

Des Weiteren wird die Aufgabe durch ein entsprechendes Verfahren mit den eingangs genannten Merkmalen dadurch gelöst, dass das paarige Abtrennen der Flügel oder der Flügelteile jeweils nacheinander mittels einer ersten Trenneinrichtung und einer zweiten Trenneinrichtung ausgeführt wird.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine erste perspektivische Ansicht der erfindungsgemäßen Flügelschneidvorrichtung,
- Fig. 2: eine zweite perspektivische Ansicht der erfindungsgemäßen Flügelschneidvorrichtung,
- Fig. 3: eine dritte perspektivische Ansicht der erfindungsgemäßen Flügelschneidvorrichtung und
- Fig. 4: eine Frontansicht der erfindungsgemäßen Flügelschneidvorrichtung mit Blickrichtung in Transportrichtung.

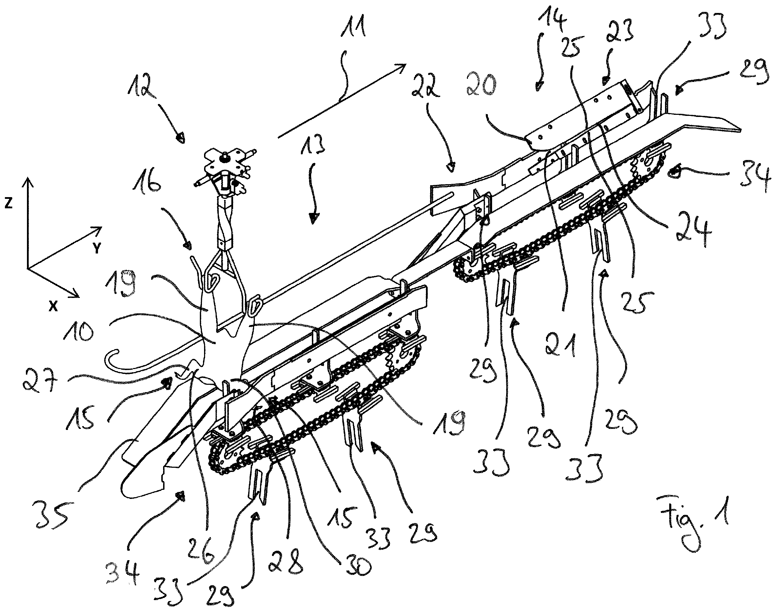

Im Folgenden wird die erfindungsgemäße Flügelschneidvorrichtung anhand der Figuren 1 bis 4 erläutert. Die folgenden Ausführungen dienen auch zur Veranschaulichung des erfindungsgemäßen Verfahrens.

In der Figur 1 ist eine erste perspektivische Ansicht der erfindungsgemäßen Flügelschneidvorrichtung gezeigt. Die Flügelschneidvorrichtung ist zur Verarbeitung von Geflügelschlachtkörpern 10, von denen aus Gründen der besseren Übersichtlichkeit in den Figuren nur jeweils einer dargestellt ist, eingerichtet und ausgebildet. Die Geflügelschlachtkörper 10 werden entlang einer Förderstrecke in Transportrichtung 11 mittels einer Fördereinrichtung 12 gefördert. Die Fördereinrichtung 12 ist in der Zeichnung nur schematisch angedeutet.

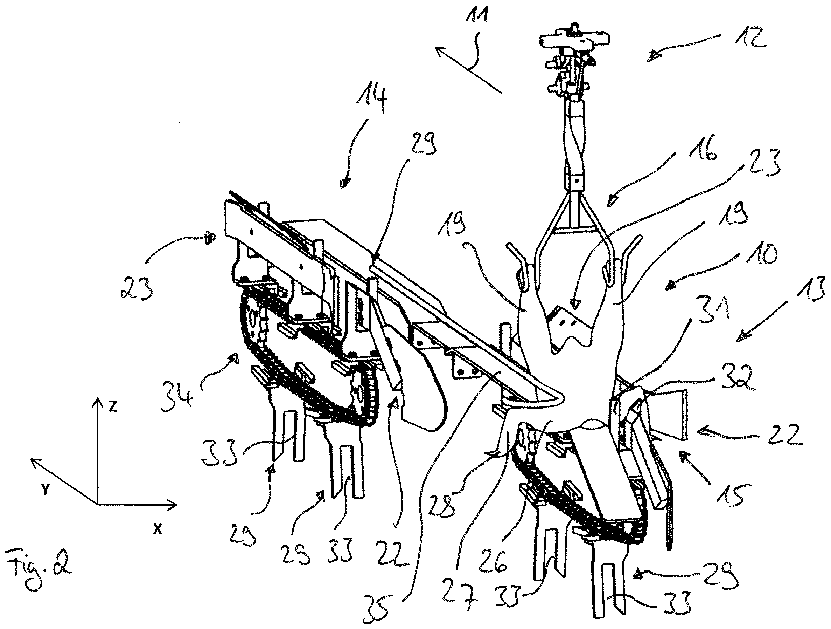

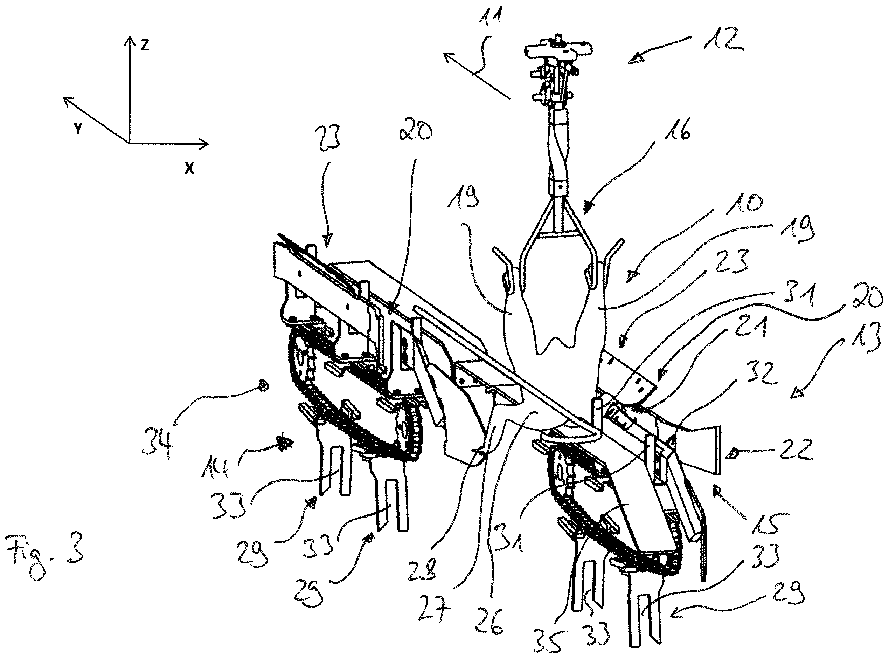

Die Figuren 1 und 2 zeigen den Geflügelschlachtkörper 10 jeweils in einer ersten Position, während der Geflügelschlachtkörper 10 in der Figur 3 in einer zweiten Position gezeigt ist, nachdem der Geflügelschlachtkörper 10 weiter in Transportrichtung gefördert worden ist.

Die erfindungsgemäße Flügelschneidvorrichtung umfasst eine erste Trenneinrichtung 13 und eine zweite Trenneinrichtung 14. Die Trenneinrichtungen 13, 14 sind zum paarigen Abtrennen von Flügeln oder Flügelteilen 15 von jeweils einem der Geflügelschlachtkörper 10 ausgebildet. Die erste Trenneinrichtung 13 und die zweite Trenneinrichtung 14 sind entlang der Förderstrecke derart versetzt angeordnet, dass das paarige Abtrennen der Flügel oder der Flügelteile 15 jeweils nacheinander erfolgt.

Figur 1 zeigt, wie der Geflügelschlachtkörper 10 beim Fördern in Transportrichtung entlang der Förderstrecke zunächst die erste Trenneinrichtung 13 passiert. Die Trenneinrichtung 13 ist eingerichtet, den Flügel oder die Flügelteile 15 von der rechten Seite des Geflügelschlachtkörpers 10 abzutrennen. Anschließend passiert der Geflügelschlachtkörper 10 die zweite Trenneinrichtung 14. Die Trenneinrichtung 14 ist eingerichtet, den Flügel oder Flügelteile 15 von der linken Seite des Geflügelschlachtkörpers 10 abzutrennen. Die gezeigte Reihenfolge des Abtrennens der Flügel oder Flügelteile 15 ist rein beispielhaft. Alternativ kann auch zunächst mit der ersten Trenneinrichtung 13 die linke Seite des Geflügelschlachtkörpers 10 und anschließend die rechte Seite des Geflügelschlachtkörpers 10 bearbeitet werden.

Vorteilhafter Weise wird der Geflügelschlachtkörper 10 - wie der Zeichnung gezeigt - brustseitig voraus in Transportrichtung gefördert. Alternativ ist es auch möglich, den Geflügelschlachtkörper mit dem Rücken voraus zu fördern.

Vorzugsweise umfasst die Fördereinrichtung 12 Trägerelemente 16 zum Fördern und Halten Geflügelschlachtkörper 10. Aus Gründen der besseren Übersichtlichkeit ist in der Zeichnung jeweils nur eines der Trägerelemente 16 gezeigt. Die Fördereinrichtung 12 umfasst jedoch eine Vielzahl der Trägerelemente 16. Die Trägerelemente 16 sind derart eingerichtet und ausgebildet, dass die Geflügelschlachtkörper 10 quer zu der Transportrichtung 11 bzw. im Wesentlichen quer zu der Transportrichtung 11 ausweichlich gelagert sind.

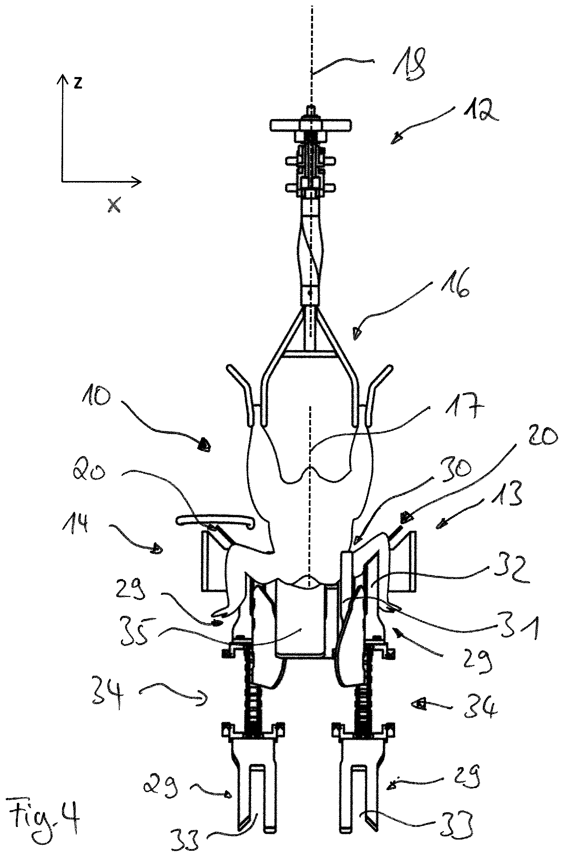

Der Geflügelschlachtkörper 10 ist folglich - wie in Figur 4 gezeigt - mit seiner Mittelachse 17 gegenüber einer Förderachse 18 ausweichlich mittels der dazu eingerichteten Trägerelemente 16 gelagert. Insbesondere ist der Geflügelschlachtkörper 10 so quer oder im Wesentlichen quer zu der Transportrichtung 11 gelagert. Mit anderen Worten ist die ausweichliche Lagerung derart eingerichtet, dass der Geflügelschlachtkörper 10 mit seiner Mittelachse 17 relativ zu der Förderachse 18 verschieblich eingerichtet ist. Die Mittelachse 17 ist eine virtuelle Achse, die mittig durch den Geflügelschlachtkörper 10 verläuft und diesen in jeweils zwei Hälften teilt.

Die Förderachse 18 bezeichnet eine mittig durch eines der Trägerelemente 16 vertikal verlaufende Achse, die senkrecht auf der Transportrichtung 11 steht. Die Förderachse 18 verläuft parallel zur Z-Achse des in Figur 4 dargestellten Koordinatensystems. Die Transportrichtung 11 ist in die XZ-Ebene hineingerichtet. Die ausweichliche Lagerung des Geflügelschlachtkörpers 10 ist derart eingerichtet, dass dieser mit seiner Mittelachse 17 einerseits quer zu der Transportrichtung 11, also zumindest mit einer Teilkomponente in einer Querrichtung ausweichen kann. Die Querrichtung bezeichnet in der Zeichnung die X-Richtung. Dies führt zu der zuvor beschriebenen Verschiebung zwischen der Mittelachse 17 und der Förderachse 18. Die Förderachse 18 kann dabei sowohl translatorisch, also durch Verschiebung in X-Richtung, als auch durch eine Schwenkbewegung verschoben werden. Eine kombinierte Schwenk-/Verschiebe-Bewegung führt zu einer Schrägstellung der Mittelachse 17 gegenüber der Förderachse 18. Ferner lässt die ausweichliche Lagerung optional ein Verdrehen des Geflügelschlachtkörpers 10 um die Z-Achse, also um die Förderachse 18, zu.

Vorzugsweise ist die Fördereinrichtung 12 als Hängeförderer ausgebildet, um die Geflügelschlachtkörper 10 mittels der Trägerelemente 16 an den Beinen 19 hängend aufzunehmen. Weiter bevorzugt sind hierzu die Trägerelemente 16 schäkelförmig ausgebildet und zur Aufnahme der Fußgelenke der Geflügelschlachtkörper 10 eingerichtet.

Die erste Trenneinrichtung 13 und die zweite Trenneinrichtung 14 umfassen jeweils Führungseinrichtungen 20. Jede der Führungseinrichtungen 20 weist jeweils einen sich parallel zu der Transportrichtung 11 erstreckenden Führungsspalt 21 auf. Die Führungseinrichtungen 20 sind eingerichtet, die Flügel oder die Flügelteile 15 jeweils in einem der Führungsspalte 21 zu halten und zumindest im Wesentlichen parallel zu der Transportrichtung 11 zu führen.

Gemäß einer weiteren vorteilhaften Ausgestaltung der Erfindung sind die Führungsspalte 21 in der Transportrichtung 11 sich verjüngend ausgebildet. Dies bewirkt, dass die Flügel oder Flügelteile 15 in eine optimale Schneidposition geführt werden. Durch die sich verjüngenden Führungsspalte 21 werden die Flügel oder Flügelteile 15 in den Führungsspalten 21 derart ausgerichtet, dass insbesondere die Gelenkbereiche der Flügel oder der Flügelteile in den Führungsspalten 21 exakt positioniert werden.

Weiter bevorzugt ist den Führungseinrichtungen 20 jeweils eine Einfädeleinrichtung 22 vorgeordnet. Die Einfädeleinrichtungen 22 sind zum Einfädeln des Flügels oder des Flügelteils 15 in den Führungsspalt 21 bzw. in die jeweiligen Führungsspalte 21 eingerichtet. Beispielsweise ist die Einfädeleinrichtung 22 - wie in der Zeichnung gezeigt - als Leitblech ausgebildet. Die Einfädeleinrichtungen 22 können alternativ jedoch auch aus einem oder mehreren Leitstäben oder dergleichen gebildet sein.

Gemäß einer bevorzugten Ausführung ist den Führungseinrichtungen 20 jeweils ein Schneidmittel 23 nachgeordnet. Mittels des Schneidmittels 23 werden jeweils der Flügel oder die Flügelteile 15 von dem Geflügelschlachtkörper 10 abgetrennt. Vorzugsweise sind die Schneidmittel 23 stationär angeordnet. Weiter bevorzugt umfasst jedes der Schneidmittel 23 zwei einen Schneidspalt 24 bildende Schneidkanten 25, die eingerichtet sind, den Flügel oder den Flügelteil 15 abzutrennen. Insbesondere sind die Führungseinrichtungen 20, die Schneidmittel 23 und die Schneidkanten 25 einstückig ausgebildet.

Gemäß einer weiter bevorzugten Ausführung ist eine von den Schneidkanten 25 sowie dem Schneidspalt 24 gebildete Schneidebene gegenüber der Horizontalen geneigt angeordnet. Anders ausgedrückt ist die Schneidebene gegenüber der X- bzw. Z-Achse geneigt angeordnet. Besonders bevorzugt ist die Schneidebene um einen Winkelbetrag geneigt angeordnet, der den anatomischen Gegebenheiten der abzutrennenden Flügelteile 15 der Geflügelschlachtkörper 10 entspricht. Wie in der Zeichnung beispielhaft gezeigt, ist die Schneidebene parallel oder im Wesentlichen Parallel zu der natürlichen Stellung des oberen Flügelteils 26 der Geflügelschlachtkörper 10 ausgerichtet, so dass der mittlere Flügelteil 27 mittels der Schneidmittel 23 von dem oberen Flügelteil 26 abgetrennt wird. Durch eine entsprechend an die anatomischen Gegebenheiten angepasste Winkelvorgabe des Neigungswinkels der Schneidebene können auf diese Weise beispielsweise auch die Flügelspitzen 28 der Geflügelschlachtkörper 10 von dem mittleren Flügelteil 27 und/oder der obere Flügelteil 26 von dem Geflügelschlachtkörper 10 abtrennt werden.

Eine weitere bevorzugte Ausbildung der Erfindung umfasst eine Reihe von mitlaufenden Schiebeelementen 29. Die Schiebeelement 29 sind jeweils in Zuordnung zu einem der Trägerelemente 16 in Transportrichtung 11 mitlaufend eingerichtet. Ferner sind die Schiebeelemente 29 eingerichtet, jeweils mit dem Flügel oder mit den Flügelteilen 15 in Eingriff zu gelangen. Die Schiebeelemente 29 sind folglich zum Führen der abzutrennenden Flügel oder Flügelteile 15 ausgebildet.

Vorzugsweise sind die Schiebeelemente 29 ferner eingerichtet, in einem Schulterbereich 30 mit dem jeweiligen Geflügelschlachtkörper 10 in Eingriff zu gelangen. Die Schiebeelemente 29 stützen auf diese Weise sowohl den Geflügelschlachtkörper 10 in dessen Schulterbereich 30 als auch die jeweils abzutrennenden Flügel oder Flügelteile 15. Die Schiebeelemente 29 sind hierzu vorzugsweise jeweils u-profilförmig ausgebildet und weisen jeweils ein Schulterbereichsschiebeteil 31 und ein Flügelbereichschiebeteil 32 mit einer dazwischen liegenden Schiebeteilausnehmung 33 umfassen.

Weiter bevorzugt sind die Schiebeelemente 29 quer zur Transportrichtung 11 derart angeordnet, dass zumindest eine der Führungseinrichtung 20 jeweils zumindest teilweise in der Schiebeteilausnehmung 33 angeordnet sind. Anders ausgedrückt ist zumindest eine der Führungseinrichtung 20 derart angeordnet, dass das jeweilige der Schiebeelemente 29 diese zumindest teilweise umgreift.

Vorteilhafter Weise sind die Schiebeelemente 29 mittels mindestens einer - in der Zeichnung nur schematisch angedeuteten - Antriebseinheit 34 zum Bewegen der Schiebeelemente 29 in Transportrichtung 11 angetrieben. Die Antriebseinheit 34 ist beispielsweise als ein motorisch angetriebener, umlaufender Endlosförderer ausgebildet. Die vorliegende Erfindung ist jedoch nicht allein auf die zuvor nur beispielhaft beschriebene Art des Antriebs der Schiebeelemente 29 beschränkt.

Gemäß einer bevorzugten Weiterbildung ist die Antriebsgeschwindigkeit der Antriebseinheit 34 variabel derart einstellbar eingerichtet, dass jedes der Schiebeelemente 29 gegenüber dem zugeordneten Trägerelement 16 zumindest temporär vorlaufend oder nachlaufend eingerichtet ist. Anders ausgedrückt ist die Antriebsgeschwindkeit der Antriebseinheit 34 derart variierbar eingerichtet, dass eines der Schiebeelemente 29 gegenüber dem jeweils zugeordneten Trägerelement 16 vor- oder nacheilt. Dieses Vor- oder Nacheilen ist entweder statisch, d.h. während des Verarbeitungsvorgangs konstant einstellbar eingerichtet, oder als Antriebsgeschwindigkeitsverlauf vergebbar eingerichtet, so dass die Antriebsgeschwindigkeit während des Verarbeitungsvorgangs variiert wird.

Vorzugsweise ist ein Auflaufelement 35 entlang der Förderstrecke angeordnet und eingerichtet, die Geflügelschlachtkörper 10 halsseitig zu stützen.

## Patentansprüche

1. Flügelschneidvorrichtung zur Verarbeitung von Geflügelschlachtkörpern (10), umfassend
eine zum Fördern der Geflügelschlachtkörper (10) entlang einer Förderstrecke in Transportrichtung (11) eingerichtete Fördereinrichtung (12),
eine erste Trenneinrichtung (13) und eine zweite Trenneinrichtung (14), die zum paarigen Abtrennen von Flügeln oder Flügelteilen (15) von jeweils einem der Geflügelschlachtkörper (10) ausgebildet sind,
wobei
die erste Trenneinrichtung (13) und die zweite Trenneinrichtung (14) entlang der Förderstrecke in Transportrichtung (11) derart versetzt angeordnet sind, dass das paarige Abtrennen der Flügel oder der Flügelteile (15) jeweils nacheinander erfolgt, und wobei
die Fördereinrichtung (12) Trägerelemente (16) zum Fördern und Halten der Geflügelschlachtkörper (10) umfasst,
**dadurch gekennzeichnet, dass**
die Trägerelemente (16) derart eingerichtet sind, dass die Geflügelschlachtkörper (10) zumindest im Wesentlichen quer zu der Transportrichtung (11) ausweichlich gelagert sind.

2. Flügelschneidvorrichtung nach Anspruch 1, **dadurch gekennzeichnet, dass** die Fördereinrichtung (12) als Hängeförderer ausgebildet ist, um die Geflügelschlachtkörper (10) mittels der Trägerelemente (16) an den Beinen (19) hängend aufzunehmen.

3. Flügelschneidvorrichtung nach einem der Ansprüche 1 oder 2, **dadurch gekennzeichnet, dass** die erste Trenneinrichtung (13) und die zweite Trenneinrichtung (14) Führungseinrichtungen (20) umfassen, wobei jede der Führungseinrichtungen (20) jeweils einen sich parallel zu der Transportrichtung (11) erstreckenden Führungsspalt (21) aufweist, und eingerichtet sind, die Flügel oder die Flügelteile (15) jeweils in einem der Führungsspalte (21) zu halten und zumindest im Wesentlichen parallel zu der Transportrichtung (11) zu führen.

4. Flügelschneidvorrichtung nach Anspruch 3, **dadurch gekennzeichnet, dass** die Führungsspalte (21) in der Transportrichtung (11) sich verjüngend ausgebildet sind.

5. Flügelschneidvorrichtung nach einem der Ansprüche 3 oder 4, **dadurch gekennzeichnet, dass** den Führungseinrichtungen (20) jeweils eine Einfädeleinrichtung (22), die zum Einfädeln des Flügels oder des Flügelteils (15) in den Führungsspalt (21) eingerichtet ist, vorgeordnet ist.

6. Flügelschneidvorrichtung nach einem der Ansprüche 3 bis 5, **dadurch gekennzeichnet, dass** den Führungseinrichtungen (20) jeweils ein Schneidmittel (23) nachgeordnet ist, wobei das Schneidmittel (23) jeweils zum Abtrennen des Flügel oder des Flügelteils (15) eingerichtet ist.

7. Flügelschneidvorrichtung nach Anspruch 6, **dadurch gekennzeichnet, dass** die Schneidmittel (23) stationär angeordnet sind.

8. Flügelschneidvorrichtung nach einem der Ansprüche 6 oder 7, **dadurch gekennzeichnet, dass** jedes der Schneidmittel (23) zwei einen Schneidspalt (24) bildende Schneidkanten (25) umfasst, die eingerichtet sind, den Flügel oder das Flügelteil (15) abzutrennen.

9. Flügelschneidvorrichtung nach Anspruch 8, **dadurch gekennzeichnet, dass** die Schneidmittel (23) derart angeordnet sind, dass eine von den Schneidkanten (25) sowie dem Schneidspalt (24) gebildete Schneidebene gegenüber der Horizontalen geneigt angeordnet ist.

10. Flügelschneidvorrichtung nach einem der Ansprüche 3 bis 9 weiter umfassend eine Reihe von mitlaufenden Schiebeelementen (29), die jeweils in Zuordnung zu einem der Trägerelemente (16) in Transportrichtung (11) mitlaufen und eingerichtet sind, jeweils mit dem Flügel oder mit den Flügelteile (15) in Eingriff zu gelangen.

11. Flügelschneidvorrichtung nach Anspruch 10, **dadurch gekennzeichnet, dass** die Schiebeelemente (29) ferner eingerichtet sind, in einem Schulterbereich (30) mit dem jeweiligen Geflügelschlachtkörper (10) in Eingriff zu gelangen.

12. Flügelschneidvorrichtung nach Anspruch 11, **dadurch gekennzeichnet, dass** die Schiebeelemente (29) jeweils u-profilförmig ausgebildet sind und jeweils ein Schulterbereichsschiebeteil (31) und ein Flügelbereichschiebeteil (32) mit einer dazwischen liegenden Schiebeteilausnehmung (33) umfassen.

13. Flügelschneidvorrichtung nach Anspruch 12, **dadurch gekennzeichnet, dass** die Schiebeelemente (29) quer zur Transportrichtung (11) derart angeordnet sind, dass zumindest eine der Führungseinrichtungen (20) jeweils zumindest teilweise in der Schiebeteilausnehmung (33) angeordnet ist.

14. Flügelschneidvorrichtung nach einem der Ansprüche 10 bis 13, **dadurch gekennzeichnet, dass** die Schiebeelemente (29) mittels mindestens einer Antriebseinheit (34) zum Bewegen der Schiebeelemente (29) in Transportrichtung (11) angetrieben sind.

15. Flügelschneidvorrichtung nach Anspruch 14, **dadurch gekennzeichnet, dass** die Antriebsgeschwindigkeit der Antriebseinheit (34) variabel derart einstellbar eingerichtet ist, dass jedes der Schiebeelemente (29) gegenüber dem zugeordneten Trägerelementen (16) zumindest temporär vorlaufend oder nachlaufend eingerichtet ist.

16. Verfahren zum Abtrennen von Flügeln oder Flügelteilen (15) von Geflügelschlachtkörpern (10), umfassend die Schritte
- Fördern der Geflügelschlachtkörper (10) entlang einer Förderstrecke in Transportrichtung (11) mittels einer Fördereinrichtung (12),
- paariges Abtrennen der Flügel oder der Flügelteile (15) von jeweils einem der Geflügelschlachtkörper (10),
- Ausführen des paarigen Abtrennens der Flügel oder der Flügelteile (15) jeweils nacheinander mittels einer ersten Trenneinrichtung (13) und einer zweiten Trenneinrichtung (14),
**dadurch gekennzeichnet, dass**
die Geflügelschlachtkörper (10) mittels Trägerelementen (16) derart gehalten und gefördert werden, dass die Geflügelschlachtkörper (10) jeweils zumindest quer zu der Transportrichtung (11) ausweichlich gelagert sind.

17. Verfahren nach Anspruch 16, **dadurch gekennzeichnet, dass** die Geflügelschlachtkörper (10) mittels der Trägerelemente (16) an den Beinen (19) hängend gefördert werden.

18. Verfahren nach einem der Ansprüche 16 oder 17, **gekennzeichnet durch** paralleles Führen der Flügel oder der Flügelteile (15) mittels Führungseinrichtungen (20), die jeweils sich parallel zur Transportrichtung (11) erstreckende Führungsspalte (21) aufweisen.

19. Verfahren nach Anspruch 18,**gekennzeichnet durch** Einfädeln der Flügel oder der Flügelteile (15) in den jeweiligen der Führungsspalte (21) mittels einer Einfädeleinrichtung (22).

20. Verfahren nach einem der Ansprüche 18 oder 19, **gekennzeichnet durch** Abtrennen der Flügel oder der Flügelteile (15) mittels jeweils den Führungseinrichtungen (20) nachgeordneten Schneidmitteln (23).

21. Verfahren nach Anspruch 20, **dadurch gekennzeichnet, dass** das Abtrennen mittels stationär angeordneten Schneidmitteln (23) ausgeführt wird.

22. Verfahren nach einem der Ansprüche 19 bis 21, **gekennzeichnet durch** Führen der Flügel oder der Flügelteilte (15) in einen mittels zweier Schneidkanten (25) gebildeten Schneidspalt (24) zum Abtrennen derselben.

23. Verfahren nach Anspruch 22, **dadurch gekennzeichnet, dass** das Abtrennen durch Schneiden in einer von den Schneidkanten (25) sowie dem Schneidspalt (24) gebildeten gegenüber der Horizontalen geneigten Schneidebene erfolgt.

24. Verfahren nach einem der Ansprüche 18 bis 23, **dadurch gekennzeichnet, dass** eine Reihe von mitlaufenden Schiebeelementen (29) jeweils einem der Trägerelemente (16) zugeordnet ist und unter Eingriff mit einem der Flügel oder einem der Flügelteile (15) in Transportrichtung (11) mitlaufen.

25. Verfahren nach Anspruch 24, ferner **gekennzeichnet dadurch, dass** die Trägerelemente (16) jeweils mit einem Schulterbereich (30) mit den Geflügelschlachtkörpern (10) in Eingriff gelangen.

26. Verfahren nach einem der Ansprüche 24 oder 25, **dadurch gekennzeichnet, dass** die Schiebeelemente (29) zum Bewegen in Transportrichtung (11) mittels einer Antriebseinheit (34) angetrieben werden.

27. Verfahren nach Anspruch 26, **gekennzeichnet durch** zumindest temporäres Variieren der Antriebsgeschwindigkeit der Antriebseinheit (34), so dass jedes der Schiebeelemente (29) gegenüber dem zugeordneten Trägerelement (16) zumindest temporär vorläuft oder nachläuft.

## Claims

1. Wing cutting apparatus for processing poultry carcasses (10), comprising
a conveying device (12) configured to convey the poultry carcasses (10) along a conveying line in transport direction (11),
a first separating device (13) and a second separating device (14) which are designed to separate wings or wing parts (15) in pairs from one each of the poultry carcasses (10),
wherein
the first separating device (13) and the second separating device (14) are arranged offset along the conveying line in the transport direction (11) in such a manner that the wings or wing parts (15) of a pair are each separated in succession, and wherein the conveying device (12) comprises carrier elements (16) for conveying and holding the poultry carcasses (10),
**characterised in that**
the carrier elements (16) are so configured that the poultry carcasses (10) are mounted to be deflectable at least substantially transversely to the transport direction (11).

2. Wing cutting apparatus according to claim 1, **characterised in that** the conveying device (12) is in the form of an overhead conveyor for receiving the poultry carcasses (10) suspended by their legs (19) by means of the carrier elements (16).

3. Wing cutting apparatus according to one of claims 1 or 2, **characterised in that** the first separating device (13) and the second separating device (14) comprise guiding devices (20), each of the guiding devices (20) having a guiding gap (21) extending parallel to the transport direction (11), and are configured to hold the wings or wing parts (15) in one of the guiding gaps (21) and to guide them at least substantially parallel to the transport direction (11).

4. Wing cutting apparatus according to claim 3, **characterised in that** the guiding gaps (21) are configured to taper in the transport direction (11).

5. Wing cutting apparatus according to one of claims 3 or 4, **characterised in that** a threading device (22) is arranged upstream of each guiding device (20), which threading device is configured to thread the wing or wing part (15) into the guiding gap (21).

6. Wing cutting apparatus according to any one of claims 3 to 5, **characterised in that** a cutting means (23) is arranged downstream of each guiding device (20), the cutting means (23) being configured to separate the wing or wing part (15).

7. Wing cutting apparatus according to claim 6, **characterised in that** the cutting means (23) are arranged to be stationary.

8. Wing cutting apparatus according to one of claims 6 or 7, **characterised in that** each of the cutting means (23) comprises two cutting edges (25) forming a cutting gap (24), which cutting edges are configured to separate the wing or wing part (15).

9. Wing cutting apparatus according to claim 8, **characterised in that** the cutting means (23) are so arranged that a cutting plane formed by the cutting edges (25) and the cutting gap (24) is arranged inclined relative to the horizontal.

10. Wing cutting apparatus according to any one of claims 3 to 9, further comprising a plurality of concurrent pushing elements (29) which run along in the transport direction (11) each in association with one of the carrier elements (16) and are configured to come into engagement with the wing or wing parts (15).

11. Wing cutting apparatus according to claim 10, **characterised in that** the pushing elements (29) are further configured to come into engagement with the corresponding poultry carcass (10) in a shoulder region (30).

12. Wing cutting apparatus according to claim 11, **characterised in that** the pushing elements (29) are each designed in the form of a U-shaped profile and each comprise a shoulder region pushing piece (31) and a wing region pushing piece (32) with a pushing piece recess (33) located therebetween.

13. Wing cutting apparatus according to claim 12, **characterised in that** the pushing elements (29) are so arranged transversely to the transport direction (11) that at least one of the guiding devices (20) is arranged at least partially in the pushing piece recess (33).

14. Wing cutting apparatus according to any one of claims 10 to 13, **characterised in that** the pushing elements (29) are driven by means of at least one drive unit (34) for moving the pushing elements (29) in the transport direction (11).

15. Wing cutting apparatus according to claim 14, **characterised in that** the drive speed of the drive unit (34) is configured to be variably adjustable in such a manner that each of the pushing elements (29) is configured to be in advance of or to lag behind the associated carrier element (16) at least temporarily.

16. Method for separating wings or wing parts (15) from poultry carcasses (10), comprising the steps
- conveying the poultry carcass (10) along a conveying line in transport direction (11) by means of a conveying device (12),
- separating the wings or wing parts (15) in pairs from one of the poultry carcasses (10),
- performing the separation in pairs of the wings or wing parts (15) each in succession by means of a first separating device (13) and a second separating device (14),
**characterised in that**
the poultry carcasses (10) are held and conveyed by means of carrier elements (16) in such a manner that the poultry carcasses (10) are each mounted to be deflectable at least transversely to the transport direction (11).

17. Method according to claim 16, **characterised in that** the poultry carcasses (10) are conveyed suspended by their legs (19) by means of the carrier elements (16).

18. Method according to claim 16 or 17, **characterised by** parallel guiding of the wings or wing parts (15) by means of guiding devices (20) which each have guiding gaps (21) extending parallel to the transport direction (11).

19. Method according to claim 18, **characterised by** threading the wings or wing parts (15) into the respective guiding gap (21) by means of a threading device (22).

20. Method according to one of claims 18 or 19, **characterised by** separation of the wings or wing parts (15) by means of cutting means (23) arranged downstream of the guiding devices (20).

21. Method according to claim 20, **characterised in that** the separation is carried out by means of cutting means (23) which are arranged to be stationary.

22. Method according to any one of claims 19 to 21, **characterised by** guiding of the wings or wing parts (15) into a cutting gap (24) formed by means of two cutting edges (25) for separation thereof.

23. Method according to claim 22, **characterised in that** the separation takes place by cutting in a cutting plane which is formed by the cutting edges (25) and the cutting gap (24) and which is inclined relative to the horizontal.

24. Method according to any one of claims 18 to 23, **characterised in that** a plurality of concurrent pushing elements (29) are associated with in each case one of the carrier elements (16) and run along in the transport direction (11) in engagement with one of the wings or wing parts (15).

25. Method according to claim 24, further **characterised in that** the carrier elements (16) each come into engagement with the poultry carcasses (10) with a shoulder region (30).

26. Method according to one of claims 24 or 25, **characterised in that** the pushing elements (29) are driven for movement in the transport direction (11) by means of a drive unit (34).

27. Method according to claim 26, **characterised by** at least temporary variation of the drive speed of the drive unit (34), so that each of the pushing elements (29) is in advance of or lags behind the associated carrier element (16) at least temporarily.

## Revendications

1. Dispositif de découpe d'aile pour la transformation de carcasses de volaille (10), comprenant
un moyen d'acheminement (12) destiné à l'acheminement des carcasses de volaille (10) le long d'une voie d'acheminement dans le sens de transport (11),
un premier moyen de tranchage (13) et un deuxième moyen de tranchage (14) qui sont conçus pour le tranchage par paire d'ailes ou de parties d'aile (15) d'une des carcasses de volaille (10) respective,
dans lequel
le premier moyen de tranchage (13) et le deuxième moyen de tranchage (14) sont agencés décalés le long de la voie d'acheminement dans le sens de transport (11), de telle sorte que le tranchage par paire des ailes ou des parties d'aile (15) s'effectue respectivement l'une après l'autre, et dans lequel
le moyen d'acheminement (12) comprend des éléments porteurs (16) pour acheminer et maintenir les carcasses de volaille (10),
**caractérisé en ce que**
les éléments porteurs (16) sont conçus de telle sorte que les carcasses de volaille (10) sont disposées de manière à se dérober au moins sensiblement transversalement par rapport au sens de transport (11).

2. Dispositif de découpe d'aile selon la revendication 1, **caractérisé en ce que** le moyen d'acheminement (12) est conçu en tant que convoyeur suspendu pour accueillir les carcasses de volaille (10) suspendues par les cuisses (19) à l'aide des éléments porteurs (16).

3. Dispositif de découpe d'aile selon l'une quelconque des revendications 1 ou 2, **caractérisé en ce que** le premier moyen de tranchage (13) et le deuxième moyen de tranchage (14) comprennent des moyens de guidage (20), chacun des moyens de guidage (20) présentant respectivement une fente de guidage (21) s'étendant à la parallèle du sens de transport (11), et sont destinés à maintenir les ailes ou les parties d'aile (15) dans une des fentes de guidage (21) respective et de les diriger au moins sensiblement parallèlement au sens de transport (11).

4. Dispositif de découpe d'aile selon la revendication 3, **caractérisé en ce que** les fentes de guidage (21) sont conçues se rétrécissant dans le sens de transport (11).

5. Dispositif de découpe d'aile selon l'une quelconque des revendications 3 ou 4, **caractérisé en ce qu'**est agencé, avant chaque moyen de guidage (20), un moyen d'enfilage (22) respectif destiné à enfiler l'aile ou la partie d'aile (15) dans la fente de guidage (21).

6. Dispositif de découpe d'aile selon l'une quelconque des revendications 3 à 5, **caractérisé en ce qu'**est agencé, après chaque moyen de guidage (20), un moyen de découpe (23) respectif, le moyen de découpe (23) étant respectivement destiné au tranchage de l'aile ou de la partie d'aile (15).

7. Dispositif de découpe d'aile selon la revendication 6, **caractérisé en ce que** les moyens de découpe (23) sont agencés de manière stationnaire.

8. Dispositif de découpe d'aile selon l'une quelconque des revendications 6 ou 7, **caractérisé en ce que** chacun des moyens de découpe (23) comprend deux bords tranchants (25) formant une fente de découpe (24), lesquels bords tranchants (25) sont destinés à trancher l'aile ou la partie d'aile (15).

9. Dispositif de découpe d'aile selon la revendication 8, **caractérisé en ce que** les moyens de découpe (23) sont agencés de telle sorte qu'un plan de découpe formé par les bords tranchants (25) ainsi que la fente de découpe (24) est agencé incliné par rapport à l'horizontale.

10. Dispositif de découpe d'aile selon l'une quelconque des revendications 3 à 9, comprenant en outre une série d'éléments coulissants (29) suiveurs qui suivent respectivement en association avec un des éléments porteurs (16) dans le sens de transport (11) et sont destinés à entrer en prise avec l'aile ou les parties d'aile (15).

11. Dispositif de découpe d'aile selon la revendication 10, **caractérisé en ce que** les éléments coulissants (29) sont de plus destinés à entrer en prise, dans une zone d'épaule (30), avec la carcasse de volaille (10) respective.

12. Dispositif de découpe d'aile selon la revendication 11, **caractérisé en ce que** les éléments coulissants (29) sont conçus chacun en forme de profil U et comprennent respectivement une pièce coulissante de zone d'épaule (31) et une pièce coulissante de zone d'aile (32) munies d'une cavité pour pièce coulissante (33) située entre elles.

13. Dispositif de découpe d'aile selon la revendication 12, **caractérisé en ce que** les éléments coulissants (29) sont agencés à la transversale du sens de transport (11) de telle sorte qu'au moins un des moyens de guidage (20) est agencé respectivement au moins partiellement dans la cavité pour pièce coulissante (33).

14. Dispositif de découpe d'aile selon l'une quelconque des revendications 10 à 13, **caractérisé en ce que** les éléments coulissants (29) sont entraînés au moyen d'au moins une unité d'entraînement (34) pour déplacer les éléments coulissants (29) dans le sens de transport (11).

15. Dispositif de découpe d'aile selon la revendication 14, **caractérisé en ce que** la vitesse d'entraînement de l'unité d'entraînement (34) est destinée pour être variable, susceptible d'être réglée de telle sorte que chacun des éléments coulissants (29) est destiné à être au moins temporairement en amont ou en aval de l'élément porteur (16) associé.

16. Procédé de tranchage d'ailes ou de parties d'aile (15) de carcasses de volaille (10), comprenant les étapes
- d'acheminement des carcasses de volaille (10) le long d'une voie d'acheminement dans le sens de transport (11) à l'aide d'un moyen d'acheminement (12),
- de tranchage par paire des ailes ou des parties d'aile (15) d'une des carcasses de volaille (10) respective,
- de réalisation du tranchage par paire des ailes ou des parties d'aile (15) respectivement l'une après l'autre à l'aide d'un premier moyen de tranchage (13) et d'un deuxième moyen de tranchage (14),
**caractérisé en ce que**
les carcasses de volaille (10) sont maintenues et acheminées à l'aide d'éléments porteurs (16) de telle sorte que les carcasses de volaille (10) sont chacune disposées de manière à se dérober au moins transversalement par rapport au sens de transport (11).

17. Procédé selon la revendication 16, **caractérisé en ce que** les carcasses de volaille (10) sont acheminées suspendues par les cuisses (19) à l'aide des éléments porteurs (16).

18. Procédé selon l'une quelconque des revendications 16 ou 17, **caractérisé en ce que** les ailes ou les parties d'aile (15) sont dirigées parallèlement à l'aide de moyens de guidage (20) qui présentent chacun une fente de guidage (21) s'étendant parallèlement au sens de transport (11).

19. Procédé selon la revendication 18, **caractérisé en ce que** les ailes ou les parties d'aile (15) sont enfilées dans la fente de guidage (21) respective à l'aide d'un moyen d'enfilage (22).

20. Procédé selon l'une quelconque des revendications 18 ou 19, **caractérisé en ce que** les ailes ou les parties d'aile (15) sont tranchées à l'aide des moyens de découpe (23) agencés respectivement après les moyens de guidage (20).

21. Procédé selon la revendication 20, **caractérisé en ce que** le tranchage est réalisé à l'aide de moyens de découpe (23) agencés de manière stationnaire.

22. Procédé selon l'une quelconque des revendications 19 à 21, **caractérisé en ce que** les ailes ou les parties d'aile (15) sont dirigées dans une fente de découpe (24) formée par deux bords tranchants (25) pour le tranchage de celles-ci.

23. Procédé selon la revendication 22, **caractérisé en ce que** le tranchage s'effectue par découpe dans un plan de découpe formé par les bords tranchants (25) ainsi que la fente de découpe (24), incliné par rapport à l'horizontale.

24. Procédé selon l'une quelconque des revendications 18 à 23, **caractérisé en ce qu'**une série d'éléments coulissants (29) suiveurs est associée à un des éléments porteurs (16) respectif et qu'ils suivent dans le sens de transport (11), en prise avec une des ailes ou des parties d'aile (15).

25. Procédé selon la revendication 24, **caractérisé de plus en ce que** les éléments porteurs (16) entrent respectivement en prise avec les carcasses de volaille (10) par une zone d'épaule (30).

26. Procédé selon l'une quelconque des revendications 24 ou 25, **caractérisé en ce que** les éléments coulissants (29) sont entraînés à l'aide d'une unité d'entraînement (34) pour le déplacement dans le sens de transport (11).

27. Procédé selon la revendication 26, **caractérisé en ce que** la vitesse d'entraînement de l'unité d'entraînement (34) est variée au moins temporairement de telle sorte que chacun des éléments coulissants (29) précède ou suit au moins temporairement l'élément porteur (16) associé.
